# EUROPEAN PATENT APPLICATION

(11) **EP 3 876 174 A1**
(43) Date of publication of application: **08.09.2021**
(21) Application number: 21155317.7
(22) Date of filing: 04.02.2021
(51) Int. Cl.: G06Q 20/18, G06Q 20/20, G06Q 20/32, G07G 1/00, G07G 3/00

(54) **SALES DATA PROCESSING APPARATUS AND METHOD**

(30) Priority: 25.02.2020 JP 2020029637
(71) Applicant: Toshiba TEC Kabushiki Kaisha, Tokyo 141-8562 (JP)
(72) Inventor: Kakinoki, Naoto, Shinagawa-ku, Tokyo 141-8562 (JP)
(74) Representative: Bandpay & Greuter

(57) **Abstract**

According to one or more embodiments, a sales data processing apparatus comprises a processor that registers merchandise which is a sales target and generates transaction registration information having commodity information of the registered merchandise and transaction event information. The processor further detects a failure in the sales data processing apparatus and determines whether the transaction registration information can be transmitted via a network. The processor outputs a code symbol corresponding to the transaction registration information if the transaction registration information cannot be transmitted via the network after the failure has been detected.

## Description

### FIELD

Embodiments described herein relate generally to a sales data processing apparatus and a sales data processing method.

### BACKGROUND

Conventionally, in a store that sells merchandise, a sales data processing apparatus is used to execute a merchandise registration process for registering the merchandise in a sales transaction and a payment process for settling the sales transaction for the purchase price of the registered items of merchandise.

In such a sales data processing apparatus, when a failure occurs in the middle of the merchandise registration process or the payment process, the sales data processing apparatus may transmit transaction registration information generated by the merchandise registration process or the payment process to another sales data processing apparatus via a network. Upon receipt of the transaction registration information, the other sales data processing apparatus may continue the processing using the transferred transaction registration information.

However, if the transaction registration information cannot be successfully transmitted via the network, a customer will be made to wait until the sales data processing apparatus at which the failure has occurred can be restored.

Hence, there is a need for a sales data processing apparatus and a program thereof that can allow another sales data processing apparatus to continue a process without necessarily going through a network in the case of a failure.

### DESCRIPTION OF THE DRAWINGS

FIG. 1 depicts a checkout system according to an embodiment.
FIG. 2 is a block diagram of a configuration of a self-POS terminal according to an embodiment.
FIG. 3 is a block diagram of a configuration of a management server according to an embodiment.
FIG. 4 depicts an example data configuration of a transaction registration information table according to an embodiment.
FIG. 5 is a block diagram of a configuration of a checkout system according to an embodiment.
FIG. 6 is a flowchart of an output process according to an embodiment.
FIG. 7 is a flowchart of a continuation process according to an embodiment.

### DETAILED DESCRIPTION

According to an embodiment, a sales data processing apparatus includes a processor configured to: register merchandise in a sales transaction; generate transaction registration information for the sales transaction, the transaction registration information being associated with a transaction identification code and including commodity information of the registered merchandise and transaction event information; transmit the transaction registration information to a management server as generated; detect a failure of the sales data processing apparatus; determine whether the generated transaction registration information can be transmitted via a network; and output a code symbol encoding at least the transaction identification code of the sales transaction if the generated transaction registration information cannot be transmitted via the network after the failure has been detected.

Preferably, the processor is further configured to: read the code symbol and obtain the corresponding transaction registration information; and register the merchandise with the commodity information included in the obtained transaction registration information.

Preferably, the corresponding transaction information is obtained from the management server.

Preferably, the processor is further configured to output the code symbol by displaying the code symbol on a display screen or by printing the code symbol on paper.

Preferably, the code symbol is output as a two-dimensional code.

Preferably, the processor is further configured to select an output method for outputting the code symbol.

Preferably, the processor is further configured to: display a plurality of output methods for outputting the code symbol; and receive an operation to select one output method from the plurality of output methods.

There is also provided a checkout system, comprising: a management server; the above-mentioned sales data processing apparatus configured as a first sales data processing apparatus having a network connection to the management server; and a second sales data processing apparatus having a network connection to the management server and comprising a processor and a code reading device configured to read the code symbol, the processor being configured to obtain the transaction registration information for the sales transaction by reading the code symbol output by the first sales data processing apparatus.

Preferably, the processor of the second sales data processing apparatus is configured to continue the sales transaction initiated by the first sales data processing apparatus based on the obtained transaction registration information.

Preferably, the processor of the second sales data processing apparatus is configured to obtain the transaction registration information from the management server via the network connection of the second sales data processing apparatus by using the transaction identification code read from the code symbol by the code reading device.

Preferably, the code reading device is an optical scanner.

Preferably, the first processor is further configured to: display a plurality of output methods for outputting the code symbol; and receive an input operation from a user to select one output method from the plurality of output methods; and output the code symbol by the selected output method.

There is also provided a non-transitory computer-readable storage medium storing a program causing a sales data processing apparatus to perform a process comprising: registering merchandise in a sales transaction; generating transaction registration information for the sales transaction, the transaction registration information being associated with a transaction identification code and including commodity information of the registered merchandise and transaction event information; transmitting the transaction registration information to a management server as generated; detecting a failure of the sales data processing apparatus; determining whether the generated transaction registration information can be transmitted via a network; and outputting a code symbol encoding at least the transaction identification code of the sales transaction if the generated transaction registration information cannot be transmitted via the network after the failure has been detected.

Preferably, the process further comprises outputting the code symbol by displaying the code symbol on a display screen or by printing the code symbol on paper.

Preferably, the process further comprises: displaying a plurality of output methods for outputting the code symbol; and receiving an input operation from a user to select one output method from the plurality of output methods.

Hereinafter, embodiments of a sales data processing apparatus and a sales data processing program will be described in further detail with reference to the attached drawings. Embodiments described below do not limit the configuration, specifications, or the like of the sales data processing apparatus and program.

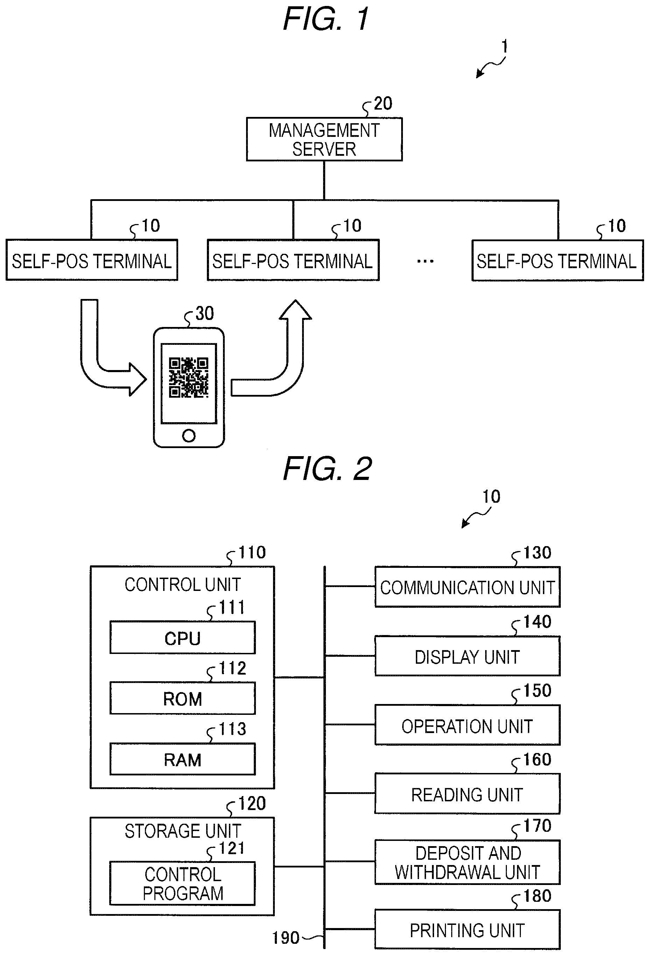

FIG. 1 depicts a checkout system 1 according to one embodiment. The checkout system 1 includes a plurality of self-POS terminals 10 and a management server 20. The plurality of self-POS terminals 10 and the management server 20 are connected to be capable of communicating with each other via a network.

The self-POS terminal 10 is an example of a sales data processing apparatus in the present embodiment. The self-POS terminal 10 is operated by a customer at a store or the like and executes a sales data process such as a merchandise registration process for registering items of merchandise in a sales transaction and a payment process (settlement process) for the merchandise registered in the merchandise registration process. The self-POS terminal 10 generates transaction registration information in the sales data process. The self-POS terminal 10 transmits the transaction registration information to the management server 20.

The self-POS terminal 10 is further configured to transmit the transaction registration information to another self-POS terminal 10 via the management server 20 when some failure occurs at the first self-POS terminal 10. Upon receipt of the transaction registration information from the first self-POS terminal 10, the second self-POS terminal 10 uses the received transaction registration information to take over and continue the sales data process that had been initiated at the first self-POS terminal 10.

If a self-POS terminal 10 cannot transmit the transaction registration information to another self-POS terminal 10 due to its own failure or some failure in the network, then first self-POS terminal 10 outputs the transaction registration information by, for example, displaying or printing a code symbol such as a two-dimensional code that encodes or otherwise represents the transaction registration information already generated at the first self-POS terminal 10. When the first self-POS terminal 10 displays or prints the code symbol, the customer can then cause a mobile terminal 30, such as a smartphone, to capture an image of the code symbol. The customer then displays the captured (imaged) code symbol on a display unit of the mobile terminal 30. Next, the customer uses the second self-POS terminal 10 to read the captured code symbol as displayed on the display unit of the mobile terminal 30. Alternatively, the customer may cause the second self-POS terminal 10 to read the code symbol that has been printed on a paper sheet.

Based on the read code symbol generated by the first self-POS terminal 10, the second self-POS terminal 10 acquires the transaction registration information from the first self-POS terminal 10 at which the failure has occurred.

The management server 20 is a server apparatus that manages the checkout system 1. The management server 20 stores the transaction registration information received from a plurality of self-POS terminals 10. The management server 20 can function to transmit the transaction registration information from the first self-POS terminal 10 to another self-POS terminal 10 (a second self-POS terminal 10) when a failure occurs in the first self-POS terminal 10. The management server 20 is not limited to a single server apparatus and may be configured with a plurality of server apparatuses.

FIG. 2 is a block diagram of a configuration of the self-POS terminal 10 according to one embodiment. The self-POS terminal 10 includes a control unit 110, a storage unit 120, a communication unit 130, a display unit 140, an operation unit 150, a reading unit 160, a deposit and withdrawal unit 170, and a printing unit 180. These units are mutually connected to each other via a system bus 190 such as a data bus or an address bus.

The control unit 110 is a computer that controls an overall operation of the self-POS terminal 10 and realizes various functions of the self-POS terminal 10. The control unit 110 includes a central processing unit (CPU) 111, a read only memory (ROM) 112, a random-access memory (RAM) 113, and the like. The CPU 111 controls the overall operation of the self-POS terminal 10. The ROM 112 is a storage medium that stores various programs and data. The RAM 113 is a storage medium that temporarily stores various programs and various pieces of data. The CPU 111 executes the programs stored in the ROM 112 or the storage unit 120 with the RAM 113 as a work area (or a work region).

The storage unit 120 is a storage apparatus such as a hard disk drive (HDD) or a solid-state drive (SSD). The storage unit 120 stores a control program 121. The control program 121, when executed, causes the control unit 110 or the CPU 111 to preform various processes to realize the various functions of an operating system or the self-POS terminal 10 according to the present embodiment.

The communication unit 130 is an interface for communicating with another apparatus via a network. For example, the communication unit 130 executes the communication with the management server 20.

The display unit 140 is a display apparatus such as a liquid crystal display.

The operation unit 150 is an input apparatus such as a touch pad that receives various operations by detecting a touched place or position on a screen of the display unit 140. The operation unit 150 may include or be a hardware button or the like.

The reading unit 160 is a scanner apparatus that reads a code symbol such as a barcode or a two-dimensional code. For example, the reading unit 160 acquires a merchandise code that identifies an item of merchandise by reading a barcode attached thereto. The reading unit 160 acquires the transaction registration information by reading the code symbols from items of merchandise to be purchased by a store customer or the like.

The deposit and withdrawal unit 170 is an automatic money dispenser that receives deposits (payments) and outputs change as part of the payment process. The deposit and withdrawal unit 170 stores money such as coins and bills deposited from a deposit port into a storage part. The deposit and withdrawal unit 170 dispenses money such as coins and bills from the storage part to a dispensing port.

The printing unit 180 is a printer that prints various pieces of information, such as transaction receipts and the like.

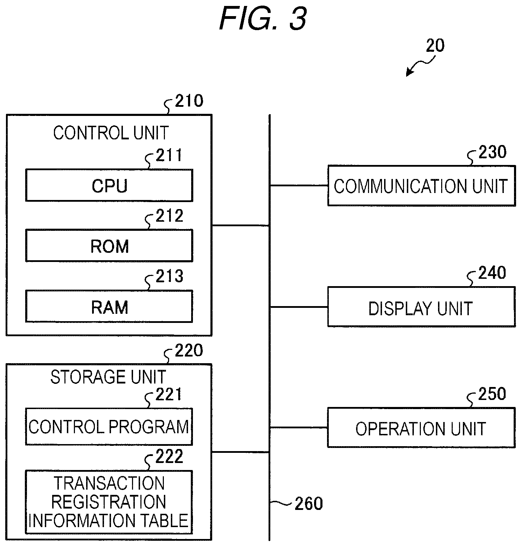

FIG. 3 is a block diagram of a configuration of the management server 20 according to one embodiment. The management server 20 includes a control unit 210, a storage unit 220, a communication unit 230, a display unit 240, and an operation unit 250. These units are mutually connected to each other via a system bus 260 such as a data bus or an address bus.

The control unit 210 is a computer that controls an overall operation of the management server 20 and realizes various functions of the management server 20. The control unit 210 includes a CPU 211, a ROM 212, and a RAM 213. The CPU 211 integrally controls the operation of the management server 20. The ROM 212 is a storage medium that stores various programs or data. The RAM 213 is a storage medium that temporarily stores various programs and various types of data. The CPU 211 executes the programs stored in the ROM 212 or the storage unit 220 with the RAM 213 as a work area (or a work region).

The storage unit 220 is a storage apparatus such as an HDD or an SSD. The storage unit 220 stores a control program 221 and a transaction registration information table 222. The transaction registration information table 222 is not limited to be stored in the management server 20 and may be stored in another apparatus. Further, the transaction registration information table 222 is not limited to be stored in a single apparatus and may be distributed and stored in a plurality of apparatuses.

The control program 221, when executed, causes the control unit 210 to perform various processes to realize the various functions of the management server 20 according to the present embodiment. The control program 221 may execute in conjunction with an operating system or other software of the management server 20.

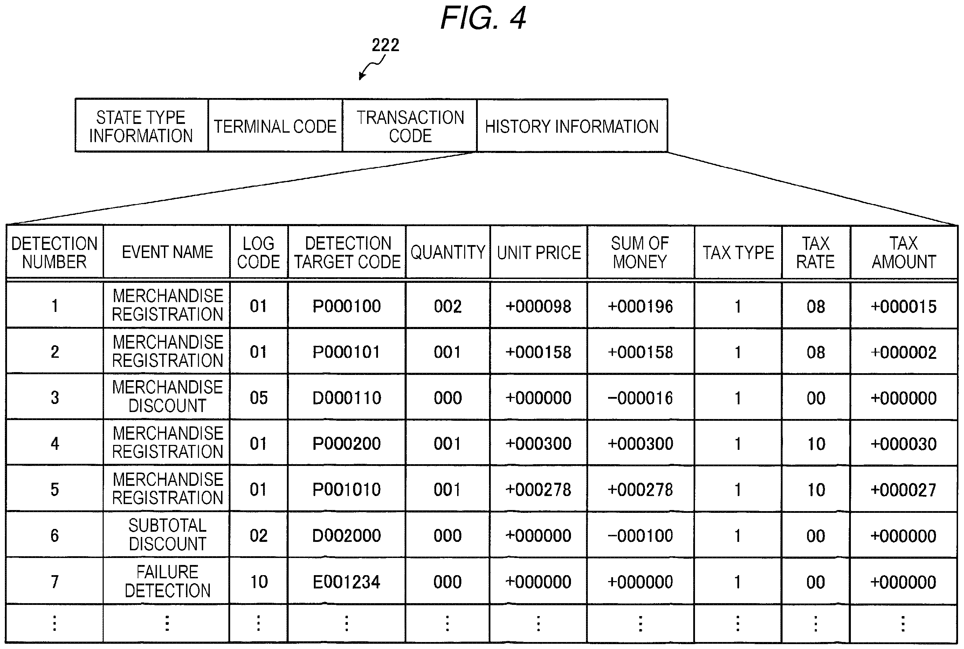

FIG. 4 depicts an example data configuration of the transaction registration information table 222 according to one embodiment. The transaction registration information table 222 is an information table containing the transaction registration information generated by the self-POS terminal 10 during the sales data process. The transaction registration information includes state type information, a terminal code, a transaction code, and one or more pieces of history information. The state type information is information indicating the state of the self-POS terminal 10. For example, the state type information indicates that a transaction is in progress. The terminal code is for identifying the particular self-POS terminal 10 that is generating or has generated the transaction registration information. The transaction code is for identifying a particular transaction.

In this context, the history information is a log or record of events occurring during a particular transaction at a self-POS terminal 10. For example, the history information records information indicating the items of merchandise registered in the registration process, information indicating receipt of an input operation, and information indicating that a failure was detected. The history information for a particular transaction can include information such as a detection number, an event name, a log code, a detection target code, a quantity, a unit price, a sum of money, a tax type code, a tax rate, and a tax amount. The detection number is index information indicating the order of logged entries. The event name is information indicating the type of event being logged. Possible events to be logged includes merchandise registration, application of a merchandise discount, an application of a subtotal discount, a failure and the like. In Fig. 4, the event name "merchandise registration" indicates a logging of a merchandise registration event. The event name "merchandise discount" indicates a logging of an application of a discount (e.g., a product coupon was applied) in the merchandise registration process. The event name "subtotal discount" indicates a logging of discount event executed with respect to a subtotal of the transaction (e.g., application of store coupon or a store loyalty discount). The event name "failure detection" indicates a logging of a detected failure.

The log code is for identifying the logged event. The detection target code is for identifying the detection target associated with the logged event. For a merchandise registration, the detection target code is the merchandise code identifying the merchandise. For a merchandise discount event or the subtotal discount event, the detection target code is for identifying a reason for the application of the discount, such as identification information for a coupon or identification information for a storewide sale event or the like. For a failure detection event, the detection target code is a failure or error code for identifying the failure type. For merchandise registration, the quantity is information indicating the number of items being registered under the same product code. For merchandise registration, the unit price is information indicating the unit price of the item of merchandise and the sum of money is information indicating the unit price multiplied by the number of items (units)In the logging of a merchandise discount or a subtotal discount, the sum of money is information indicating the sum of money to be discounted. The "tax type" value is information indicating a which type of tax is to be applied to the logged event. For merchandise registration, the tax rate is information indicating the tax rate applied to the merchandise sale. For merchandise registration, the tax amount is information indicating the tax amount applied to the merchandise sale.

The communication unit 230 is an interface for communicating with another apparatus via a network. For example, the communication unit 230 is an interface for communicating with the self-POS terminal 10.

The display unit 240 is a display apparatus such as a liquid crystal display. The operation unit 250 is an input apparatus such as a keyboard or a mouse.

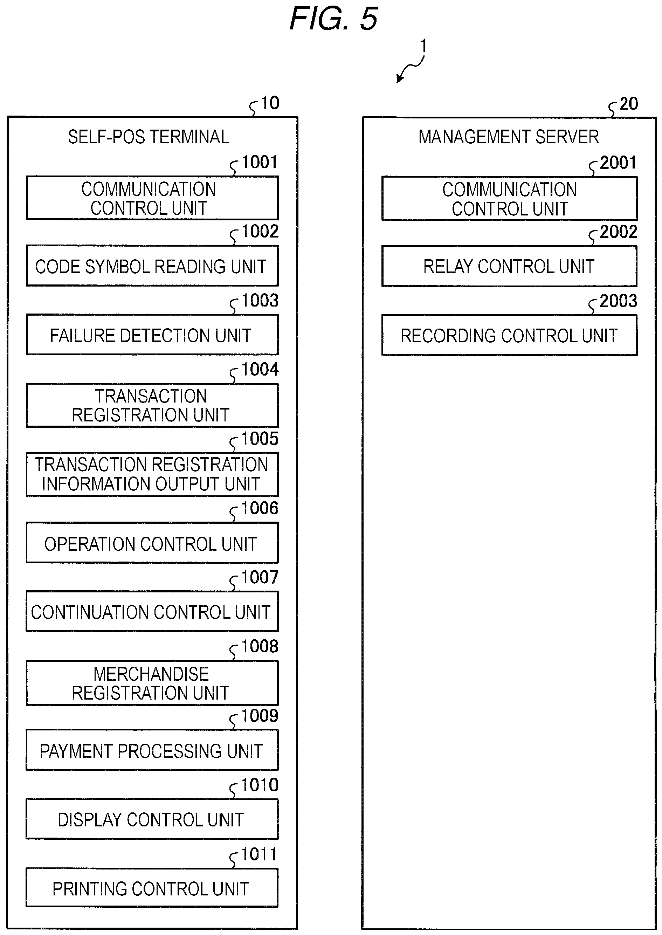

FIG. 5 is a block diagram of a configuration of each apparatus of the checkout system 1 according to one embodiment.

The control unit 110 of the self-POS terminal 10 develops the control program 121 stored in the storage unit 120 in the RAM 113 and operates according to the control program 121 to generate each functional unit in the RAM 113. For example, the control unit 110 of the self-POS terminal 10 includes, as functional units, a communication control unit 1001, a code symbol reading unit 1002, a failure detection unit 1003, a transaction registration unit 1004, a transaction registration information output unit 1005, an operation control unit 1006, a continuation control unit 1007, a merchandise registration unit 1008, a payment processing unit 1009, a display control unit 1010, and a printing control unit 1011.

The communication control unit 1001 controls the communication unit 130 to execute the communication with the management server 20. For example, the communication control unit 1001 transmits the transaction registration information to the management server 20. Further, the communication control unit 1001 determines whether the transaction registration information can be transmitted to the management server 20 at all if the sales data processing cannot be continued in the first self-POS terminal 10. Here, the reasons why the transaction registration information cannot be transmitted is not particularly limited. For example, transmission may not be possible due to a failure that has occurred in the first self-POS terminal 10 itself, or transmission may not be possible due to a failure of the network. Transmission may not be possible for other reasons too.

The code symbol reading unit 1002 controls the reading unit 160 to read a code symbol such as a barcode or a two-dimensional code. The code symbol reading unit 1002 obtains the merchandise code based on the read code symbol.

The code symbol reading unit 1002 also reads transaction identification information. For example, the code symbol reading unit 1002 reads the transaction registration information including the terminal code that is the identification information indicating the self-POS terminal 10 that has generated the transaction registration information and failure information indicating a failure that has occurred in the self-POS terminal 10 during the merchandise registration processing. Accordingly, the code symbol reading unit 1002 can recognize a failure that has occurred in a first self-POS terminal 10 and notify another apparatus such as the management server 20 that the failure has occurred.

The failure detection unit 1003 detects a failure. For example, the failure detection unit 1003 detects a failure of a first self-POS terminal 10 based on the hardware or the log output by the functional units of the first self-POS terminal 10. If the self-POS terminal 10 includes a sensor, the failure detection unit 1003 can detect a failure based on an output value of the sensor.

The transaction registration unit 1004 generates the transaction registration information. For example, the transaction registration unit 1004 generates the transaction registration information based on the merchandise registered by the merchandise registration unit 1008. In other words, when the merchandise registration unit 1008 registerers the merchandise being purchased in the sales transaction according to reading/scanning of a product or commodity code, the transaction registration unit 1004 acquires and adds the corresponding commodity information for the registered items of merchandises to the transaction registration information. Here, the commodity information can be information such as a merchandise code and/or a unit price. The transaction registration unit 1004 generates the transaction registration information to include the failure information for the failure detected by the failure detection unit 1003. The failure information is information such as a failure code indicated by the detection target code included in the transaction registration information.

When the code symbol reading unit 1002 reads the transaction registration information, the transaction registration unit 1004 adds information such as the terminal code of the first self-POS terminal to the read transaction registration information. Also, the transaction registration unit 1004 adds the commodity information to the read transaction registration information when the merchandise registration unit 1008 registers the merchandise. Furthermore, when the failure detection unit 1003 detects a failure, the transaction registration unit 1004 adds the failure information to the read transaction registration information. Accordingly, the transaction registration unit 1004 can continue the transaction even if a failure occurs.

The transaction registration information output unit 1005 outputs the transaction registration information if the communication control unit 1001 cannot transmit the transaction registration information when the failure detection unit 1003 has detected a failure. For example, the transaction registration information output unit 1005 generates a code symbol such as a two-dimensional code encoding or otherwise representing the transaction registration information. Then, the transaction registration information output unit 1005 causes the display control unit 1010 to display a reading screen having the code symbol representing the transaction registration information. The transaction registration information output unit 1005 may also cause the printing control unit 1011 to print a sheet (e.g. a paper receipt) having the code symbol representing the transaction registration information. In this manner, the transaction registration information output unit 1005 outputs the transaction registration information by at least one of displaying or printing.

The operation control unit 1006 controls the operation unit 150 (FIG. 2) to receive various operations. For example, the operation control unit 1006 receives an operation of selecting an output method of the transaction registration information by the transaction registration information output unit 1005.

The continuation control unit 1007 controls continuation of a sales data process that has been initiated by and interrupted due to a failure at another self-POS terminal 10. For example, the continuation control unit 1007 determines whether the sales data process can be continued when the failure detection unit 1003 has detected a failure. The continuation control unit 1007 causes the communication control unit 1001 to transmit the transaction registration information to the management server 20 via a network when the sales data process cannot be continued. When the transaction registration information cannot be transmitted via the network, the continuation control unit 1007 causes the display control unit 1010 or the printing control unit 1011 to output the transaction registration information by displaying or printing.

When the code symbol reading unit 1002 reads the code symbol indicating the transaction registration information, the continuation control unit 1007 causes the merchandise registration unit 1008 to execute the merchandise registration based on the history information of the merchandise registration included in the read transaction registration information.

The merchandise registration unit 1008 registers the merchandise which is a sales target. For example, when the code symbol reading unit 1002 reads the code symbol indicating the merchandise code, the merchandise registration unit 1008 registers the merchandise specified by the merchandise code as merchandise which is being purchased in a sales transaction.

The merchandise registration unit 1008 also includes the merchandise corresponding to the commodity information included in the transaction registration information as read by the code symbol reading unit 1002 as merchandise registered in the sales transaction. For example, when the code symbol reading unit 1002 reads the code symbol indicating the transaction registration information, the merchandise registration unit 1008 registers the merchandise specified in the history information. In other words, the merchandise registration unit 1008 registers the detection target code that is a merchandise code, along with the corresponding values for the quantity, the unit price, the sum of money, the tax type, the tax rate, and the tax amount. Further, when the history information included in the transaction registration information indicates that a merchandise discount or subtotal discount was previously registered, the merchandise registration unit 1008 registers the same merchandise discount or subtotal discount.

The payment processing unit 1009 executes the payment process for the merchandise registered by the merchandise registration unit 1008. For example, the payment processing unit 1009 calculates the sum of coins or bills when the deposit and withdrawal unit 170 receives the deposit of money. Then, the payment processing unit 1009 causes the deposit and withdrawal unit 170 to dispense the coins or bills.

The display control unit 1010 controls the display unit 140 to display various screens. For example, the display control unit 1010 causes the display unit 140 to display "a continuation impossible screen" when the sales data process cannot be continued. The continuation impossible screen is a screen indicating to the user or customer that the sales data process cannot be continued due to the occurrence of a failure. The display control unit 1010 causes the display unit 140 to display an output selection screen for selecting the output method of the transaction registration information by the transaction registration information output unit 1005. The output selection screen is a screen for requesting a user selection of output method, for example, selecting between the display method or the print method as the output method for the transaction registration information. With this output selection screen, the display control unit 1010 requests a customer to select the output method of the transaction registration information by the transaction registration information output unit 1005.

The printing control unit 1011 controls the printing unit 180 to print various pieces of information on a printing medium such as a receipt paper sheet. For example, the printing control unit 1011 prints a receipt illustrating transaction details. The printing control unit 1011 prints a receipt illustrating the transaction registration information when it is selected to output the transaction registration information by printing as the output method of the transaction registration information.

The control unit 210 of the management server 20 develops the control program 221 stored in the storage unit 220 in the RAM 213 and operates according to the control program 221 to generate each functional unit in the RAM 213 (FIG. 3). The control unit 210 of the management server 20 includes a communication control unit 2001, a relay control unit 2002, and a recording control unit 2003 as functional units (FIG. 5).

The communication control unit 2001 controls the communication unit 230 to execute the communication with the self-POS terminal 10. For example, the communication control unit 2001 receives the transaction registration information from the self-POS terminal 10 or transmits the transaction registration information to the self-POS terminal 10.

When the received transaction registration information includes a log code indicating that a failure has occurred, the communication control unit 2001 transmits the fact that the failure has occurred in the self-POS terminal 10 specified by the terminal code included in the transaction registration information, to an information processing apparatus used by a salesclerk or the like. Alternatively, or in addition, The communication control unit 2001 may transmit the failure information indicating the failure occurred in the self-POS terminal 10 to the information processing apparatus used by a salesclerk or the like. Accordingly, the salesclerk or the like can recognize that the failure has occurred in the self-POS terminal 10.

The relay control unit 2002 controls relay of the transaction registration information. For example, when the self-POS terminal 10 cannot continue the sales data process due to a failure that has occurred therein but the transaction registration information can still be transmitted via the network, the transaction registration information can be transmitted to the management server 20 via the network. When the communication control unit 2001 of the management server 20 receives the transaction registration information, the relay control unit 2002 causes the communication control unit 2001 to transmit the transaction registration information to a destination which is another self-POS terminal 10 different from the first self-POS terminal 10 that transmitted the transaction registration information. This second self-POS terminal 10 may be a self-POS terminal 10 that has been designated by the first self-POS terminal 10, may be a self-POS terminal 10 designated by the relay control unit 2002, or may be arbitrarily set in advance.

The recording control unit 2003 causes the transaction registration information to be stored in the transaction registration information table 222 when the communication control unit 2001 receives the transaction registration information. For example, when the communication control unit 2001 receives the transaction registration information, the recording control unit 2003 causes the transaction code of the received transaction registration information to be stored in association with the transaction registration information having the same transaction code in the transaction registration information table 222. Accordingly, with reference to the transaction registration information table 222, an administrator, an operator, or the like can recognize that the transaction has been continued at another self-POS terminal 10 after the failure occurred in the first self-POS terminal 10. Further, with reference to failure detection of the history information included in the transaction registration information stored in the transaction registration information table 222, the administrator or the like can evaluate the details of the failure that has occurred in the first self-POS terminal 10.

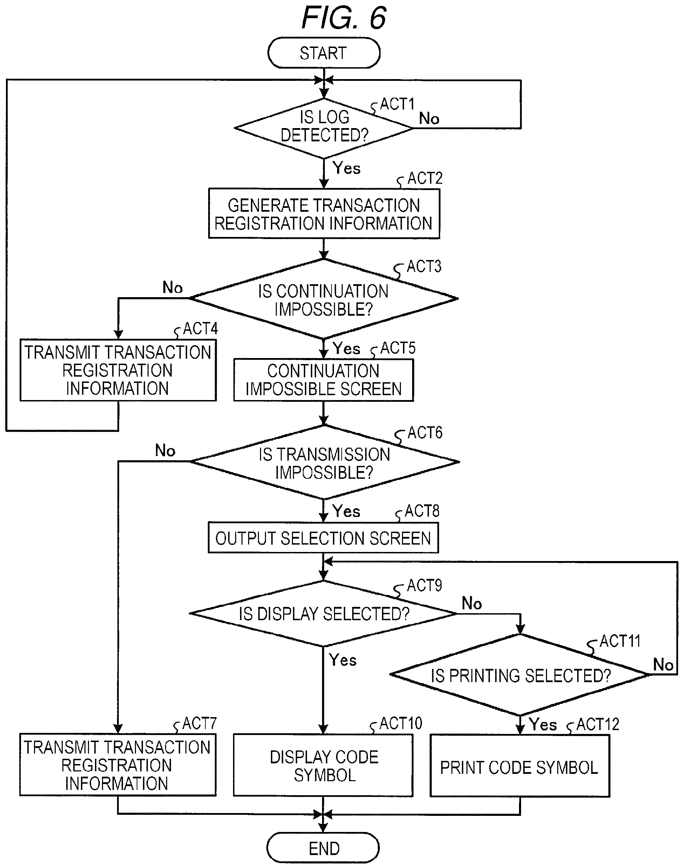

FIG. 6 is a flowchart of an output process executed by the self-POS terminal 10 according to one embodiment. In the present embodiment, the output process is a process of outputting the transaction registration information when the transaction registration information cannot be transmitted to the management server 20 via the network upon the occurrence of a failure.

The transaction registration unit 1004 determines whether a log for generating the transaction registration information is detected (ACT 1). When the log is not detected (ACT 1; No), the transaction registration unit 1004 returns to a wait state.

When the log is detected (ACT 1; Yes), the transaction registration unit 1004 generates the transaction registration information (ACT 2).

The continuation control unit 1007 determines whether the sales data process can be continued based on the detected log (ACT 3).

When the process can be continued (ACT 3; No), the communication control unit 1001 transmits the transaction registration information to the management server 20 via the network (ACT 4).

When the process cannot be continued (ACT 3; Yes), the display control unit 1010 displays the continuation impossible screen indicating that the sales data process cannot be continued (ACT 5).

The communication control unit 1001 determines whether the transaction registration information can be transmitted to the management server 20 via the network (ACT 6). When the network transmission is possible (ACT 6; No), the communication control unit 1001 transmits the transaction registration information to the management server 20 via the network (ACT 7). Then, the self-POS terminal 10 ends the output process.

When the network transmission is not possible (ACT 6; Yes), the display control unit 1010 displays the output selection screen for selecting the output method of the transaction registration information (ACT 8). In the output selection screen, for example, the displaying method and the printing method are displayed to be selectable as the output method of the transaction registration information.

The operation control unit 1006 determines whether an operation of selecting the displaying method as the output method is received (ACT 9). If the display output method is selected (ACT 9; Yes), the display control unit 1010 displays the reading screen showing the code symbol thereon indicating the transaction registration information (ACT 10). Then, the self-POS terminal 10 ends the output process.

If the display output method is not selected (ACT 9; No), the operation control unit 1006 determines whether the operation of selecting the printing method as the output method is received (ACT 11). If the print output method is not selected (ACT 11; No), the self-POS terminal 10 returns to ACT 9.

If the print output method is selected (ACT 11; Yes), the printing control unit 1011 prints the reading paper sheet having the code symbol printed thereon indicating the transaction registration information (ACT 12). Then, the self-POS terminal 10 ends the output process.

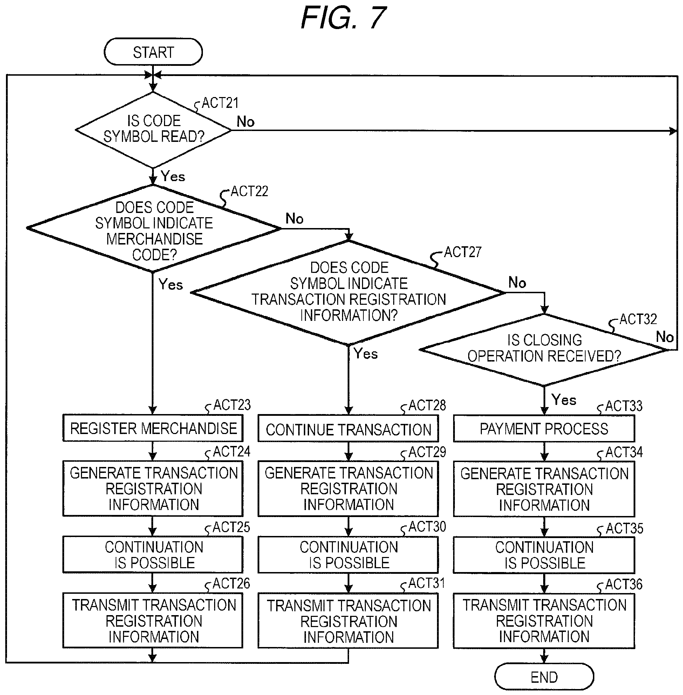

FIG. 7 is a flowchart of a continuation process executed by the self-POS terminal 10 according to one embodiment. In the present embodiment, the continuation process is a process of continuing the sales data process using the transaction registration information. The continuation process as shown in FIG. 7 is for a case where the sales data process can be continued (see, for example, ACT 25, ACT 30, and ACT 35).

The code symbol reading unit 1002 determines whether the code symbol is read (ACT 21). If the code symbol is not read (ACT 21; No), the code symbol reading unit 1002 returns to a wait state.

If the code symbol is read (ACT 21; Yes), the code symbol reading unit 1002 determines whether the code symbol indicates the merchandise code (ACT 22). If the code symbol is the merchandise code (ACT 22; Yes), the merchandise registration unit 1008 registers the merchandise specified by the merchandise code as the merchandise which is the sales target (ACT 23).

The transaction registration unit 1004 generates the transaction registration information including the history information indicating that the merchandise which is the sales target has been registered (ACT 24).

The continuation control unit 1007 determines whether the sales data process can be continued (ACT 25). For example, the continuation control unit 1007 determines whether a log or the like indicating that a failure has occurred is detected. In the continuation process of FIG. 7, it is assumed that the continuation control unit 1007 has determined that the sales data process can be continued (ACT 25).

The communication control unit 1001 transmits the transaction registration information to the management server 20 (ACT 26). Then, the self-POS terminal 10 returns to ACT 21.

If the code symbol is not the merchandise code (ACT 22; No), the code symbol reading unit 1002 determines whether the code symbol indicates the transaction registration information (ACT 27).

If the code symbol indicates the transaction registration information (ACT 27: Yes), the continuation control unit 1007 executes the continuation process that reflects the history information included in the transaction registration information (ACT 28).

The transaction registration unit 1004 generates the transaction registration information having the history information indicating that the continuation process is executed (ACT 29).

The continuation control unit 1007 determines whether the sales data process can be continued (ACT 30). For example, the continuation control unit 1007 determines whether a log or the like indicating that a failure occurs is detected. In the continuation process of FIG. 7, it is assumed that the continuation control unit 1007 has determined that the sales data process can be continued (ACT 30).

The communication control unit 1001 transmits the transaction registration information to the management server 20 (ACT 31). Then, the self-POS terminal 10 returns to ACT 21.

If the code symbol is not transaction registration information (ACT 27; No), the operation control unit 1006 determines whether a closing operation for ending the merchandise registration process for registering the merchandise which is a sales target has been received (ACT 32). If the closing operation has not been received (ACT 32; No), the self-POS terminal 10 returns to ACT 21.

If the closing operation has been received (ACT 32; Yes), the payment processing unit 1009 executes the payment process (ACT 33).

The transaction registration unit 1004 generates the transaction registration information having the history information indicating that the payment process is executed (ACT 34).

The continuation control unit 1007 determines whether the sales data process can be continued (ACT 35). For example, the continuation control unit 1007 determines whether a log or the like indicating that the failure has occurred is detected. In the continuation process of FIG. 7, it is assumed that the continuation control unit 1007 has determined that the sales data process can be continued (ACT 35).

The communication control unit 1001 transmits the transaction registration information to the management server 20 (ACT 36).

According to the present embodiment, the self-POS terminal 10 includes the transaction registration unit 1004 that generates the transaction registration information having the commodity information of the merchandise registered by the merchandise registration unit 1008, and the failure detection unit 1003 that detects a failure of the self-POS terminal (first self-POS terminal) 10. When the failure detection unit 1003 detects the failure of the first self-POS terminal 10, the first self-POS terminal 10 outputs a code symbol indicating the transaction registration information by displaying or printing if the transaction registration information cannot be transmitted to the management server 20 via the network. When the first self-POS terminal 10 outputs the code symbol, a customer can cause another self-POS terminal 10 to read the code symbol indicating the transaction registration information. Then, by reading the code symbol indicating the transaction registration information, the second self-POS terminal 10 can acquire the merchandise, the operation, and the like registered or input before the occurrence of the failure at the first self-POS terminal 10. Accordingly, the first self-POS terminal 10 can cause the second self-POS terminal 10 to continue the process without going through the network.

While the case where the sales data processing apparatus is the self-POS terminal 10 has been described as an example according to the present embodiment, the sales data processing apparatus is not limited to the self-POS terminal 10. The sales data processing apparatus may be a POS terminal operated by a salesclerk, may be a registration apparatus in a semi-self system in which the salesclerk performs the merchandise registration process and the customer performs the payment process, or may be a payment apparatus in a semi-self system.

While the program to be executed by each apparatus according to the present embodiment or a modified embodiment can be provided by being pre-installed in a storage medium (such as a ROM or a storage unit) included in each apparatus, the provision of the program is not limited thereto. For example, the program may be recorded and provided in recording medium that can be read by a computer as a file in an installable format or an executable format in a CD-ROM, a flexible disk (FD), a CD-R, a digital versatile disk (DVD) and the like. Furthermore, the a program can be stored in a storage medium accessible via a LAN, the Internet or the like and downloaded and stored as needed.

The program to be executed by each apparatus according to the present embodiment or a modification embodiment may be stored in a computer connected to a network such as the Internet and provided by being downloaded via the network, or may be provided or distributed via a network such as the Internet.

While certain embodiments have been described, these embodiments have been presented by way of example only and are not intended to limit the scope of the inventions. Indeed, the novel embodiment described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A sales data processing apparatus, comprising:
a processor configured to:
register merchandise in a sales transaction;
generate transaction registration information for the sales transaction, the transaction registration information being associated with a transaction identification code and including commodity information of the registered merchandise and transaction event information;
transmit the transaction registration information to a management server as generated;
detect a failure of the sales data processing apparatus;
determine whether the generated transaction registration information can be transmitted via a network; and
output a code symbol encoding at least the transaction identification code of the sales transaction if the generated transaction registration information cannot be transmitted via the network after the failure has been detected.

2. The sales data processing apparatus according to claim 1, wherein the processor is further configured to:
read the code symbol and obtain the corresponding transaction registration information; and
register the merchandise with the commodity information included in the obtained transaction registration information.

3. The sales data processing apparatus according to claim 2, wherein the corresponding transaction information is obtained from the management server.

4. The sales data processing apparatus according to any one of claims 1 to 3, wherein the processor is further configured to output the code symbol by displaying the code symbol on a display screen or by printing the code symbol on paper.

5. The sales data processing apparatus according to claim 4, wherein the code symbol is output as a two-dimensional code.

6. The sales data processing apparatus according to any one of claims 1 to 5, wherein the processor is further configured to select an output method for outputting the code symbol.

7. The sales data processing apparatus according to any one of claims 1 to 6, wherein the processor is further configured to:
display a plurality of output methods for outputting the code symbol; and
receive an operation to select one output method from the plurality of output methods.

8. A checkout system, comprising:
a management server;
the sales data processing apparatus according to claim 1 configured as a first sales data processing apparatus having a network connection to the management server; and
a second sales data processing apparatus having a network connection to the management server and comprising a processor and a code reading device configured to read the code symbol, the processor being configured to obtain the transaction registration information for the sales transaction by reading the code symbol output by the first sales data processing apparatus.

9. The checkout system according to claim 8, wherein the processor of the second sales data processing apparatus is configured to continue the sales transaction initiated by the first sales data processing apparatus based on the obtained transaction registration information.

10. The checkout system according to claim 9, wherein the processor of the second sales data processing apparatus is configured to obtain the transaction registration information from the management server via the network connection of the second sales data processing apparatus by using the transaction identification code read from the code symbol by the code reading device.

11. The checkout system according to any one of claims 8 to 10, wherein the code reading device is an optical scanner.

12. The checkout system according to any one of claims 8 to 11, wherein the first processor is further configured to:
display a plurality of output methods for outputting the code symbol; and
receive an input operation from a user to select one output method from the plurality of output methods; and
output the code symbol by the selected output method.

13. A non-transitory computer-readable storage medium storing a program causing a sales data processing apparatus to perform a process comprising:
registering merchandise in a sales transaction;
generating transaction registration information for the sales transaction, the transaction registration information being associated with a transaction identification code and including commodity information of the registered merchandise and transaction event information;
transmitting the transaction registration information to a management server as generated;
detecting a failure of the sales data processing apparatus;
determining whether the generated transaction registration information can be transmitted via a network; and
outputting a code symbol encoding at least the transaction identification code of the sales transaction if the generated transaction registration information cannot be transmitted via the network after the failure has been detected.

14. The non-transitory computer-readable storage medium according to claim 13, wherein the process further comprises outputting the code symbol by displaying the code symbol on a display screen or by printing the code symbol on paper.

15. The non-transitory computer-readable storage medium according to claim 13 or 14, wherein the process further comprises:
displaying a plurality of output methods for outputting the code symbol; and
receiving an input operation from a user to select one output method from the plurality of output methods.
